# FASCICULE DE BREVET EUROPEEN

(11) **EP 0 377 380 B1**
(45) Date de publication et mention de la délivrance du brevet: **25.08.1993**
(21) Numéro de dépôt: 89403653.2
(22) Date de dépôt: 27.12.1989
(51) Int. Cl.: H04B 10/22, H04L 5/24

(54) **Dispositif de transmission par voie infrarouge de données présentées en mode asynchrone**
Vorrichtung zur Übertragung von asynchronen Daten über einen Infrarotkanal
Apparatus for the transmission of asynchronous data over an infra-red channel

(30) Priorité: 28.12.1988 FR 8817351
(43) Date de publication de la demande: 11.07.1990
(73) Titulaire: SOCIETE GENERALE POUR LES TECHNIQUES NOUVELLES S.G.N. Société anonyme dite:, 78184 Saint-Quentin-en-Yvelines Cédex (FR)
(72) Inventeur: Cour, Jean-Michel, F-91400 Orsay (FR)
(74) Mandataire: Joly, Jean-Jacques

(56) Documents cités:
- WO-A-86/00482
- GB-A- 2 196 518

## Description

La présente invention concerne un dispositif de transmission par voie infrarouge, sans support matériel, de données présentées en mode asynchrone.

Le domaine d'application de l'invention est donc plus particulièrement celui de la transmission de données entre des organes munis d'interfaces asynchrones et situés à distance l'un de l'autre, l'espace entre ces organes étant libre de tout support matériel de liaison et étant transparent au rayonnement infrarouge. A titre d'exemple, une application particulière de l'invention est d'assurer le dialogue entre un engin mobile autonome et un système de pilotage comprenant des bornes fixes disposées le long du trajet de l'engin, comme décrit dans la demande de brevet FR-A-88 11 296 déposée au nom de la demanderesse.

Un circuit d'interface pour transmettre des données numériques reçues en mode asynchrone sous forme de données codées en mode synchrone est déjà connu de la demande de brevet WO-A-8 600 482.

Parmi les modes de transmission de données entre équipements automatiques, le mode asynchrone est le plus couramment utilisé, particulièrement via les jonctions normalisées dont les plus courantes sont celle selon l'Avis V24 du C.C.I.T.T. et celle selon le standard RS 232C de l'E.I.A.

Selon ce mode de transmission de données usuel, un mot de plusieurs bits (généralement 7 à 8) est véhiculé en série dans une trame entre un bit marqueur de début de mot et un bit marqueur de fin de mot. Un bit supplémentaire de contrôle de parité peut être inséré avant le bit de fin de mot.

Le mot est habituellement représenté par des signaux électriques bipolaires qui, sauf en cas de liaison électrique directe entre émetteur et récepteur, traversent des circuits modulateurs/démodulateurs qui permettent la transmission des signaux sous forme de plusieurs états d'une onde porteuse radioélectrique ou optique, caractérisés par la fréquence, la phase,...

Les avantages particuliers d'une transmission utilisant un signal optique dans le domaine infrarouge via des conducteurs de lumière tels que des fibres optiques sont bien connus, comme décrit, à titre d'exemple, dans la demande de brevet GB-A-2 196 518.

Or, il n'est pas toujours possible d'utiliser un support matériel de liaison, et la présente invention vise précisément les cas où un tel support n'existe pas.

La transmission d'informations par infrarouge sans support matériel de liaison est certes bien connue, l'un des domaines d'application les plus répandus étant la télécommande de téléviseurs, magnétoscopes ou appareils similaires. La transmission des signaux infrarouges est certes affectée par des sources parasites naturelles ou artificielles : lumière du jour, éclairage, points chauds de machines,... mais l'on sait pour de telles applications s'affranchir de ces parasites en émettant un signal modulé caractéristique qui est filtré en réception pour éliminer le bruit de fond.

La transmission de données en mode asynchrone par voie infrarouge, sans support matériel de liaison, pose des problèmes particuliers.

Par définition, une trame asynchrone ne comporte pas de référence d'horloge fixe de sorte que sa modulation telle quelle impose l'utilisation de signaux porteurs modulés à une fréquence élevée. Ainsi, à titre d'exemple, une modulation en fréquence correcte de type FSK exige des signaux centrés sur 100 kHz au moins pour véhiculer des trames asynchrones au débit normalisé de 9600 bauds, et ce avec une détérioration du format d'origine de l'ordre de 15 %. On notera incidemment qu'une telle détérioration peut devenir catastrophique lorsque la trame doit subir plusieurs transmissions successives.

De telles fréquences de modulation sont à la limite des possibilités offertes par les composants d'émission et réception infrarouge disponibles sur le marché à des prix relativement bas, c'est-à-dire les composants utilisés dans les appareils de grande diffusion évoqués plus haut (télécommande de téléviseurs, magnétoscopes ou appareils analogues).

Des solutions techniques existent qui offrent des possibilités plus élevées, mais elles sont coûteuses (composants rares, électronique de commande spéciale) et se heurtent à des interdictions d'emploi (diodes d'émission infrarouge à grande rapidité et grande puissance dangereuses pour les yeux).

Aussi, la présente invention a-t-elle pour but de fournir un dispositif permettant la transmission de données présentées en mode asynchrone en utilisant la voie infrarouge, sans support matériel, évitant les inconvénients de l'art antérieur indiqués ci-avant.

Ce but est atteint grâce à un dispositif du type comprenant :
- au moins un circuit d'émission ayant une entrée de données recevant des données numériques en mode asynchrone à transmettre, un émetteur infrarouge et des premiers moyens convertisseurs pour transformer les données numériques en signaux infrarouges émis, et
- au moins un circuit de réception ayant un détecteur de signaux infrarouges, une sortie de données et des deuxièmes moyens convertisseurs reliés au détecteur pour transformer des signaux infrarouges reçus en données numériques en mode asynchrone disponibles à la sortie de données,
   dispositif dans lequel, conformément à l'invention :
- les premiers moyens convertisseurs comprennent : des premiers moyens de transcodage pour convertir les données numériques en mode asynchrone reçues à l'entrée du circuit d'émission en données numériques en mode synchrone ayant une cadence au moins égale à celle des données asynchrones, et avec un format de trame tel que le nombre de bits consécutifs ayant un premier état entre deux bits ayant un deuxième état soit au plus égal à une valeur maximale prédéterminée ; et des moyens de commande de l'émetteur pour convertir sous forme d'une impulsion infrarouge au moins chaque bit ayant le deuxième état dans les données numériques synchrones, et
- les deuxièmes moyens convertisseurs comprennent des moyens de restitution de données numériques en mode synchrone à partir des impulsions infrarouges reçues par le détecteur, et des deuxièmes moyens de transcodage pour convertir les données numériques en mode synchrone restituées en données numériques en mode asynchrone disponibles à la sortie de données du circuit de réception.

Le changement de forme de trame - passage du mode asynchrone en mode synchrone - permet de limiter la fréquence de modulation à une valeur du même ordre que le débit asynchrone initial, c'est-à-dire, même pour des débits asynchrones assez élevés, une valeur autorisant l'emploi d'émetteurs et de récepteurs infrarouges bon marché et sans danger.

En outre, le mode de conversion des données asynchrones en données synchrones, puis en impulsions infrarouges que réalise le dispositif selon l'invention, assure un régime impulsionnel minimum qui permet l'entretien des conditions de travail spécifiées des filtres utilisés de façon usuelle en réception infrarouge. De préférence, le codage des données en mode synchrone est réalisé dans un format au standard HDLC ("High Level Data Link Control").

On notera encore que la régénération des données en mode asynchrone par le circuit de réception, après le relayage infrarouge, a pour effet d'éliminer les risques de détériorations cumulatives des données lorsqu'elles sont plusieurs fois retransmises.

L'invention sera mieux comprise à la lecture de la description faite ci-après, à titre indicatif mais non limitatif, en référence aux dessins annexés, sur lesquels :
- la figure 1 illustre très schématiquement une application d'un dispositif conforme à l'invention ,
- la figure 2 est un bloc-diagramme d'un mode de réalisation d'un dispositif conforme à l'invention ;
- la figure 3 illustre schématiquement une conversion de format de trame de données réalisée par le dispositif conforme à l'invention ;
- la figure 4 est un schéma plus détaillé d'une partie de circuit d'émission du dispositif de la figure 2 ,
- la figure 5 est un schéma plus détaillé d'une partie du circuit de réception du dispositif de la figure 2 ; et
- la figure 6 montre une configuration des émetteurs et récepteurs autorisant une large tolérance de positionnement entre deux dispositifs de transmission.

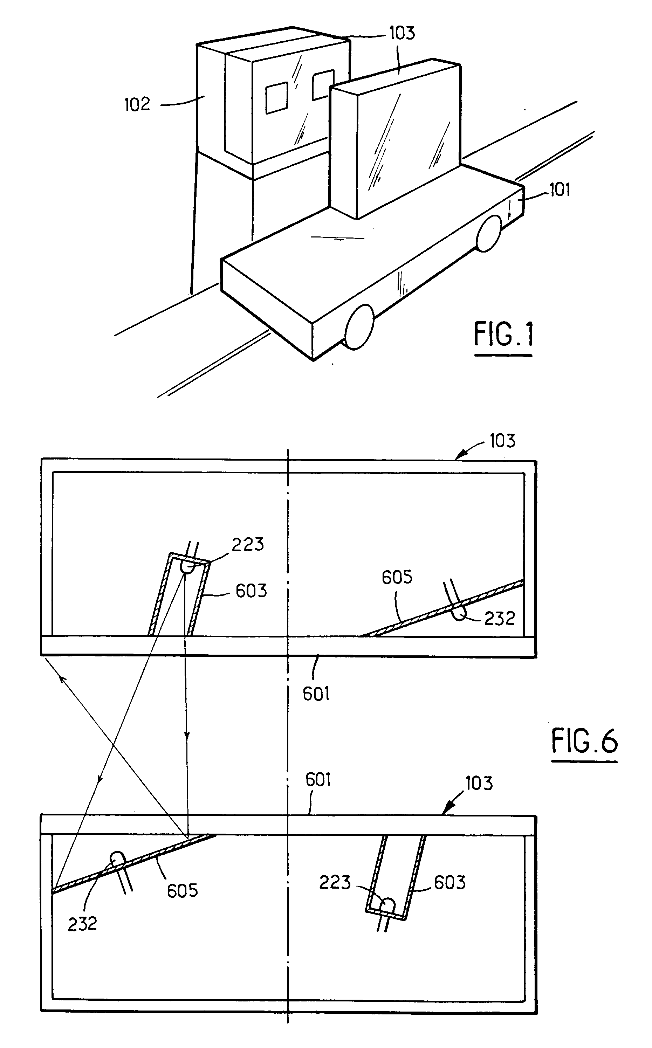

La figure 1 illustre, à titre d'exemple, une application d'un dispositif conforme à l'invention à la transmission de données entre un chariot 101 mobile suivant un trajet prédéterminé et une borne fixe 102 parmi un ensemble de bornes fixes réparties le long du trajet du chariot. La borne 102 comprend un boîtier 103 dans lequel sont logés un circuit d'émission infrarouge et un circuit de réception infrarouge. Le chariot 101 porte un boîtier 103 semblable à celui porté par la borne 102 et comprenant également au moins un circuit d'émission infrarouge et un circuit de réception infrarouge. Le chariot 101 s'immobilise devant la borne 102 de manière que les boîtiers 103 soient face à face pour autoriser la transmission de données par infrarouge à travers l'espace séparant le chariot 101 de la borne 102, sans support matériel de liaison.

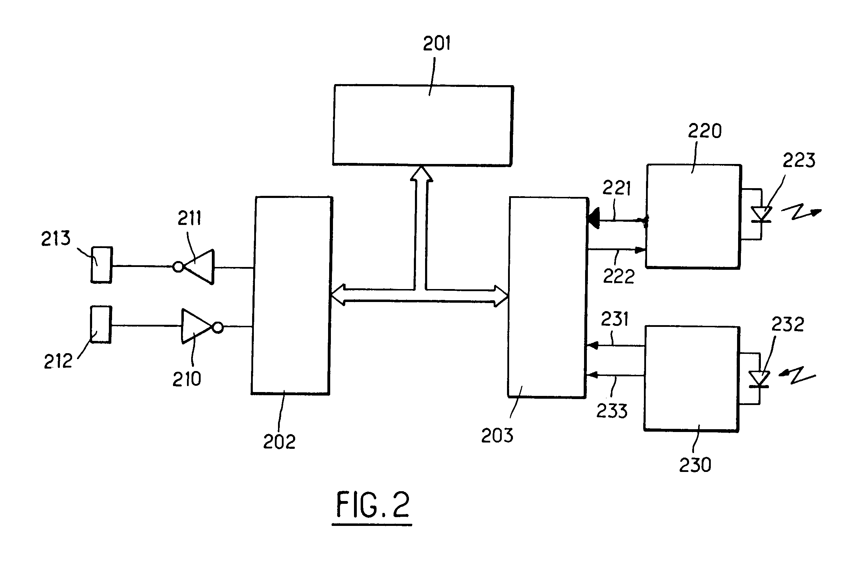

Un mode de réalisation d'un dispositif de transmission conforme à l'invention, comprenant un ensemble circuit d'émission infrarouge et circuit de réception infrarouge tel qu'il peut être contenu dans un boîtier 103, est illustré par la figure 2.

Des données numériques à transmettre sont reçues en mode asynchrone sur une entrée 212 et appliquées à un circuit d'interface asynchrone 202 par l'intermédiaire d'un circuit amplificateur 210 assurant la mise en forme des signaux. Après passage par le circuit d'interface 202, les données numériques à transmettre sont appliquées à un circuit d'interface synchrone 203 pour être insérées dans une trame synchrone. A cet effet, un signal de référence d'horloge provenant d'un circuit modulateur 220 est appliqué au circuit d'interface 203 par une liaison 221. Le circuit modulateur 220 reçoit la trame synchrone par une liaison 222 et commande une diode d'émission infrarouge 223 pour convertir les données codées en mode synchrone sous forme d'impulsions infrarouges.

En réception, les impulsions infrarouges reçues par un détecteur 232, par exemple une diode de détection infrarouge, sont démodulées au moyen du circuit démodulateur 230 pour fournir une trame synchrone qui est transmise au circuit d'interface synchrone 203 par une liaison 233. Un signal d'horloge reconstitué par le circuit démodulateur 230 à partir des impulsions reçues est transmis au circuit d'interface 203 par une liaison 231. Après passage par le circuit d'interface 203, les données numériques correspondant aux impulsions infrarouges reçues sont appliquées au circuit d'interface asynchrone 202 pour être insérées dans une trame asynchrone disponible sur une sortie 213 après passage dans un circuit amplificateur 211 assurant la mise en forme des signaux. Les circuits d'interface 202 et 203 sont utilisés tant en émission qu'en réception pour réaliser le transcodage souhaité des données. En émission, les données en mode asynchrone à transmettre sont décodées par le circuit 202 puis recodées en mode synchrone par le circuit 203. En réception, les données en mode synchrone reçues sont décodées par le circuit 203 puis recodées en mode asynchrone par le circuit 202. Le transfert des données entre les circuits 202 et 203 est controlé par un microprocesseur 201 Un programme stocké dans le microprocesseur 201 assure, pour chaque caractère reçu du circuit d'interface asynchrone 202, la recopie pour transfert vers le circuit d'interface synchrone 203 et, pour chaque caractère extrait de la trame synchrone par le circuit d'interface synchrone 203, la recopie pour transfert vers le circuit d'interface asynchrone 202.

Les circuits 202 et 203 sont par exemple constitués par un émetteur/récepteur asynchrone référencé 2651 et un émetteur/récepteur synchrone référencé 2652, tous deux commercialisés par la société des Etats-Unis d'Amérique Signetics, tandis que le micro-processeur peut être du type 8051 commercialisé par la société des Etats-Unis d'Amérique Intel.

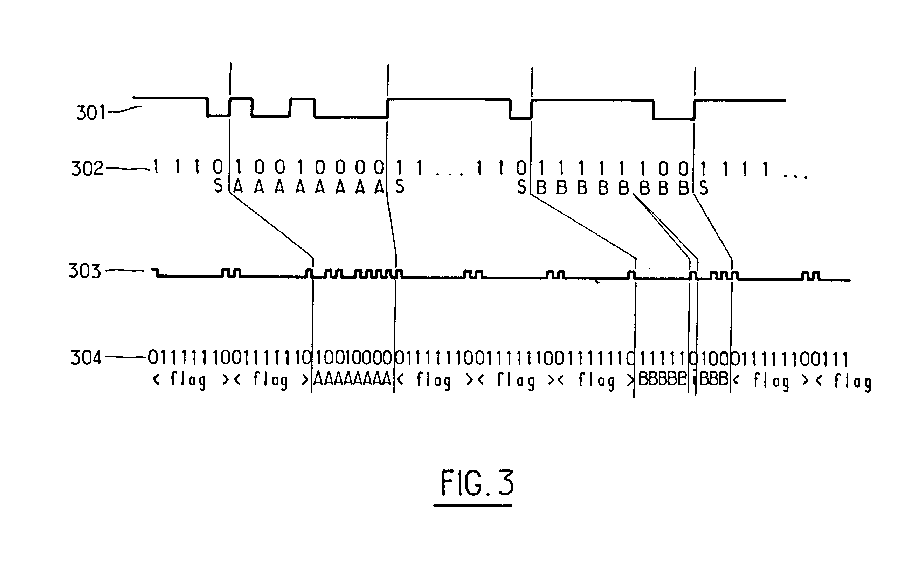

La figure 3 illustre un transcodage de données tel qu'il peut être réalisé au moyen du dispositif qui vient d'être décrit.

La référence 301 désigne un train de signaux représentatifs de données dans une trame au format asynchrone. On peut reconnaître le caractère "HT" (tabulation horizontale) puis la lettre "0" dans le code binaire normalisé C.C.I.T.T. n^{o} 5 transmis sur 7 bits avec parité paire. L'interprétation symbolique usuelle du train de signaux 301 est donnée en 302 pour illustrer le principe de conversion de format. Le train de signaux 301 est transcodé en un train de signaux impulsionnels 303 optimisé pour la transmission infrarouge. La rapidité de modulation du train de signaux 303 est supérieure ou égale à celle du train de signaux asynchrone initial 301 légèrement supérieure dans l'exemple illustré. L'interprétation symbolique du train de signaux 303 est donnée en 304. On y reconnaît le format de trame comme en transmission de données sous le sigle HDLC ("High Level Data Link Control").

Dans ce format, les intervalles de temps entre deux caractères (tels que ceux notés AAAAAAAA et BBBBBBBB) sont occupés par des séquences connues sous le nom de fanions composés de 6 bits à l'état "1" encadrés par 2 bits à l'état "0". Les données utiles ne comportent jamais six "1" consécutifs grâce au mécanisme bien connu d'insertion d'un "0" après cinq "1", illustré ici sur le deuxième caractère. Ce format de trame garantit donc au moins un "0" après six "1" consécutifs.

Il suffit par conséquent d'employer un tel format de trame en combinaison avec la représentation du "0" par une impulsion infrarouge calibrée pour assurer sur la liaison un régime impulsionnel minimum, tout en se contentant d'une rapidité de modulation du même ordre que le débit asynchrone initial. De la sorte, les conditions de travail spécifiées des filtres de réception infrarouge usuels peuvent être entretenues.

La modulation de l'émission infrarouge, de manière à représenter les bits à l'état "0" par une impulsion infrarouge calibrée et les bits à l'état "1" par une absence d'impulsion, est la plus économique en énergie puisqu'en l'absence de données l'émission est limitée à deux impulsions pour huit temps de bit. Bien entendu, d'autres procédés de modulation pourraient être utilisés, par exemple employer deux durées d'impulsion différentes pour représenter les bits à l'état "0" et les bits à l'état "1" (technique dite PWM pour "Pulse Width Modulation", ou modulation de largeur d'impulsion).

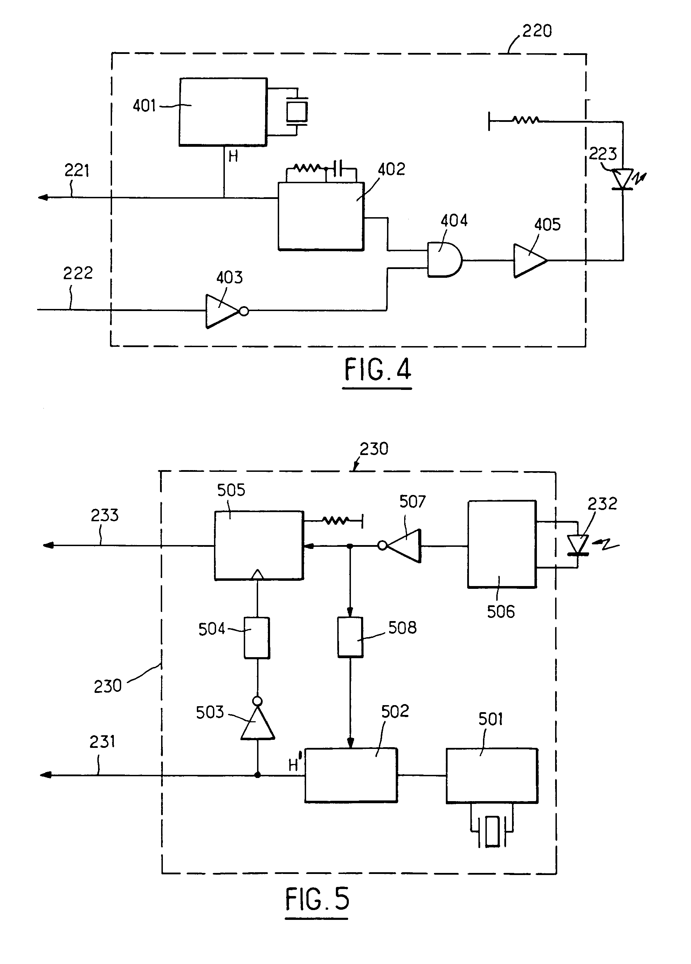

Un mode particulier de réalisation du circuit modulateur 220 sera maintenant décrit en référence à la figure 4.

Une base de temps 401 pilotée par quartz délivre un signal d'horloge symétrique H qui est transmis sur la liaison 221 et à l'entrée d'un circuit monostable 402 pour provoquer, en opposition de phase et successivement, l'affichage par le circuit d'interface synchrone 203 du bit suivant sur la liaison 222 et l'émission par le circuit monostable 402 d'une impulsion calibrée de durée inférieure à celle d'un bit.

Une porte ET 404 à deux entrées a une entrée reliée à la sortie du circuit monostable 402, l'autre entrée reliée à la liaison 222 par une porte inverseuse 403 et sa sortie reliée à la diode d'émission infrarouge 223 par l'intermédiaire d'un amplificateur de puissance 405. Le bit courant, inversé par la porte 403, bloque la porte 404 s'il est à l'état "1" tandis qu'il la rend transparente à l'impulsion produite par le circuit monostable 402, s'il est à l'état "0". De la sorte, les impulsions produites par le circuit monostable 402 n'attaquent l'amplificateur 405 que si le bit courant est à l'état "0". Il en résulte une trame infrarouge impulsionnelle telle que décrite plus haut en référence à la figure 3.

Un mode particulier de réalisation du circuit démodulateur 230 sera maintenant décrit en référence à la figure 5.

Une base de temps 501 pilotée par quartz délivre un signal d'horloge symétrique H′ après division de fréquence par un compteur intermédiaire 502. La fréquence du signal d'horloge H′ est la même que celle du signal d'horloge H fourni par la base de temps 401. Le signal d'horloge H′ est, d'une part, transmis sur la liaison 231 et, d'autre part, recopie un "1" logique dans une bascule "D" 505 après passage par une porte inverseuse 503 et un circuit retardateur 504. Le signal en sortie de la bascule "D" 505 constitue le signal de données au format synchrone transmis au circuit d'interface 203 par la liaison 233.

En l'absence d'impulsions sur l'entrée de remise à zéro de la bascule 505, celle-ci délivre sur sa sortie une succession de bits à l'état "1" à la même cadence que la vitesse de transmission. Lorsqu'une impulsion infrarouge est reçue par la diode de détection 232, un circuit préamplificateur 506 produit une impulsion électrique qui est remise en forme par une porte inverseuse 507 avant d'attaquer l'entrée de remise à zéro de la bascule 505, forçant ainsi un "0" logique comme signal de données présenté plus tard au circuit d'interface synchrone 203 via la liaison 233. Le circuit préamplificateur 506 est constitué par exemple par le circuit intégré référencé SL486 de la société britannique Plessey. Il assure, de façon connue en soi, les fonctions de filtrage et de commande automatique de gain, les paramètres de fonctionnement du circuit 506 étant entretenus par le régime impulsionnel minimum assuré par la trame synchrone choisie.

La sortie de la porte inverseuse 507 est en outre reliée à l'entrée de remise à zéro du compteur 502 par l'intermédiaire d'un circuit retardateur 508, ce qui a pour effet de recaler la phase du signal d'horloge H′ à partir du signal reçu.

Ainsi, entre les réceptions d'impulsions lumineuses correspondant à des niveaux logiques "0" (lesquelles sont dans l'exemple considéré espacées d'au plus six temps de bit) des bits au niveau "1" sont générés localement avec une horloge en retard, par exemple d'environ un quart de période, par rapport à l'horloge du modulateur d'émission. Chaque impulsion lumineuse reçue annule le niveau "1" en instance, pour présenter un niveau "0" sur la liaison 221, et recale en phase l'horloge du démodulateur de réception.

Le dispositif de transmission décrit ci-avant en référence aux figures 2 à 5 combine un circuit d'émission et un circuit de réception. Il est destiné à communiquer avec un autre dispositif de transmission analogue pour permettre une transmission de données bidirectionnelle, ou en duplex.

Bien entendu, l'invention est également applicable à la transmission unidirectionnelle de données au moyen d'un dispositif comprenant un circuit d'émission infrarouge et un circuit de réception infrarouge distants l'un de l'autre et non reliés matériellement l'un à l'autre. Dans ce cas, le circuit d'émission est par exemple constitué par les éléments du dispositif des figures 2 à 5 utilisés en émission tandis que le circuit de réception est constitué par les éléments du même dispositif utilisés en réception.

Dans le cas d'une transmission bidirectionnelle entre deux dispositifs tels que celui illustré par les figures 2 à 5, la disposition des diodes d'émission et de réception est choisie de manière à éviter une transmission parasite entre diode émettrice et diode réceptrice d'un même dispositif.

Comme le montre la figure 6, les diodes d'émission 223 et de réception 232 sont logées dans des boîtiers 103 identiques disposés tête-bêche. Les faces avant en regard des boîtiers sont matérialisées par des panneaux 601 constitués d'un matériau filtrant qui élimine l'essentiel des rayonnements émis ou reçus hors d'une bande de fréquences prédéterminée à l'intérieur de laquelle se situe le rayonnement infrarouge utilisé. Les diodes émettrices sont logées chacune au fond d'un guide 603 qui délimite un faisceau émis en direction de la diode réceptrice 604 placée en regard, devant un réflecteur 605. L'angle et l'orientation du faisceau émis par la diode émettrice 603, ainsi que la disposition de la diode réceptrice 604 et l'orientation du réflecteur 605, sont choisis de telle sorte que les rayonnements reçus sont pratiquement totalement absorbés ou réfléchis vers l'extérieur du boîtier 103 contenant la diode émettrice. De la sorte, le rayonnement émis par la diode émettrice d'un boîtier 103 ne revient vers la diode réceptrice du même boîtier qu'avec une énergie très faible par rapport à l'énergie des signaux infrarouges reçus directement de l'autre boîtier.

On peut également observer sur la figure 6 que les deux boîtiers peuvent être mutuellement rapprochés et/ou déplacés en translation et former entre eux un angle dièdre significatif sans altérer l'efficacité de la séparation des deux chemins optiques.

## Revendications

1. Dispositif de transmission de données présentées en mode asynchrone, par voie infrarouge, sans support matériel, le dispositif comprenant au moins un circuit d'émission ayant une entrée de données (212) recevant des données numériques en mode asynchrone à transmettre, un émetteur infrarouge (223) et des premiers moyens convertisseurs pour transformer les données numériques en signaux infrarouges émis, et au moins un circuit de réception ayant un détecteur de signaux infrarouges (232), une sortie de données (213) et des deuxièmes moyens convertisseurs reliés au détecteur pour transformer les signaux infrarouges reçus en données numériques en mode asynchrone disponibles à la sortie de données, caractérisé en ce que :
- les premiers moyens convertisseurs comprennent : des premiers moyens de transcodage (202, 203) pour convertir les données numériques en mode asynchrone reçues à l'entrée (212) du circuit d'émission en données numériques en mode synchrone ayant une cadence au moins égale à celle des données asynchrones, et avec un format de trame tel que le nombre de bits consécutifs ayant un premier état entre deux bits ayant un deuxième état soit au plus égal à une valeur maximale prédéterminée ; et des moyens (220) de commande de l'émetteur pour convertir sous forme d'une impulsion infrarouge au moins chaque bit ayant le deuxième état dans les données numériques synchrones, et
- les deuxièmes moyens convertisseurs comprennent des moyens (230) de restitution de données numériques en mode synchrone à partir des impulsions infrarouges reçues par le détecteur (232), et des deuxièmes moyens de transcodage (203, 202) pour convertir les données numériques en mode synchrone restituées en données numériques en mode asynchrone disponibles à la sortie (213) de données du circuit de réception.

2. Dispositif selon la revendication 1, caractérisé en ce que les premiers moyens de transcodage (202, 203) sont agencés pour convertir les données numériques en mode asynchrone en données numériques en mode synchrone dans un format de trame au standard HDLC.

## Claims

1. Asynchronous mode data transmission device, using infra-red means with no physical medium, the device comprising at least one transmission circuit having a data input (212) receiving asynchronous mode digital data to be transmitted, an infra-red transmitter (223) and first converter means to convert the digital data into transmitted infra-red signals, and at least one receiving circuit having an infra-red signals detector (232), a data output (213) and second converter means connected to the detector in order to convert the received infra-red signals into asynchronous mode digital data available at the data output, characterised in that:
- the first converter means comprise: first code conversion means (202, 203) to convert the asynchronous mode digital data received at the input (212) of the transmission circuit into synchronous mode digital data having a rate at least equal to that of the asynchronous data, and having a frame format such that the number of consecutive bits having a first state between two bits having a second state is at most equal to a predetermined maximum value; and means (220) of control of the transmitter for converting into the form of an infra-red pulse at least each bit having the second state in the synchronous digital data, and
- the second converter means comprise means (230) of retrieving synchronous mode digital data from the infra-red pulses received by the detector (232), and second code conversion means (203, 202) for converting the retrieved synchronous mode digital data into asynchronous mode digital data available at the data output (213) of the receiving circuit.

2. Device according to Claim 1, characterised in that the first code conversion means (202, 203) are arranged to convert asynchronous mode digital data into synchronous mode digital data in an HDLC standard frame format.

## Patentansprüche

1. Vorrichtung zur Übertragung von in asynchroner Form vorliegenden Daten über einen Infrarotkanal ohne materiellen Träger, welche Vorrichtung mindestens einen Sendekreis mit einem Dateneingang (212), der zu übertragende numerische Daten in asynchroner Form empfängt, einem Infrarotsender (223) und ersten Wandlermitteln zum Umformen der numerischen Daten in Infrarotsendesignale, und mindestens einen Empfangskreis mit einem Infrarotsignaldetektor (232), einem Datenausgang (213) und mit dem Detektor verbundenen zweiten Wandlermitteln zum Umformen der empfangenen Infrarotsignale in am Datenausgang verfügbare numerische Daten in asynchroner Form umfaßt, dadurch gekennzeichnet, daß:
- die ersten Wandlermittel aufweisen: erste Codewandlermittel (202, 203) zum Umwandeln der am Eingang (212) des Sendekreises empfangenen asynchronen numerischen Daten in numerische Daten in synchroner Form mit einem Takt, der mindestens gleich jenem der asynchronen Daten ist, und mit einem derartigen Rasterformat, daß die Anzahl von aufeinanderfolgenden Bits mit einem ersten Status zwischen zwei Bits mit einem zweiten Status höchstens gleich einem vorbestimmten Maximalwert ist; und Sendersteuermittel (220) zum Umwandeln mindestens jedes Bits mit dem zweiten Status in die synchronen numerischen Daten in Form eines Infrarotimpulses; und
- die zweiten Wandlermittel aufweisen: Mittel (230) zum Wiederherstellen der numerischen Daten in synchroner Form aus den vom Detektor (232) empfangenen Infrarotimpulsen und zweite Codewandlermittel (203, 202) zum Umwandeln der wiederhergestellten synchronen numerischen Daten in am Datenausgang (213) des Empfangskreises verfügbare numerische Daten in asynchroner Form.

2. Vorrichtung nach Anspruch 1, dadurch gekennzeichnet, daß die ersten Codewandlermittel (202, 203) zum Umwandeln der asynchronen numerischen Daten in synchrone numerische Daten in einem Rasterformat im HDLC-Standard vorgesehen sind.
